# EUROPEAN PATENT APPLICATION

(11) **EP 4 394 452 A1**
(43) Date of publication of application: **03.07.2024**
(21) Application number: 23150040.6
(22) Date of filing: 02.01.2023
(51) Int. Cl.: G01S 19/42

(54) **METHOD AND A DEVICE FOR DETECTING A ROAD PORTION USED BY A VEHICLE**

(71) Applicant: Valeo Comfort and Driving Assistance, 94000 Créteil (FR)
(72) Inventor: LEJAY, Frédéric, 94000 Créteil (FR)
(74) Representative: Delplanque, Arnaud

(57) **Abstract**

The invention relates to a method (100) for detecting a road portion used by a vehicle, the method (100) comprising the following steps:
- a receiver detecting (102) signals respectively received by satellites in view;
- determining (106) the road portion based on at least one feature characterizing the satellites in view.

A corresponding device is also described.

## Description

### TECHNICAL FIELD OF THE INVENTION

The invention relates to a method for detecting a road portion used by a vehicle. The invention also relates to a device for detecting a road portion used by a vehicle.

### BACKGROUND INFORMATION AND PRIOR ART

Methods are known for determining a road portion on which a vehicle is driving. These methods often use the vehicle position as determined by a receiver receiving signals from satellites in a satellite positioning system. These methods are functional, but they do not work very well when the vehicle is driving under a bridge or on a bottom layer of a multi-layer road. Thus, these methods are not accurate.

Other methods are known for determining a road layer position. These method uses several data and measurements from additional sensors and thus can demand extra cost and are not easy to implement.

The invention is intended to remedy at least one of the aforementioned drawbacks.

### SUMMARY OF THE INVENTION

One object of the invention is to provide a method for detecting a road portion used by a vehicle, the method comprising the following steps:
- a receiver detecting signals respectively received by satellites in view;
- determining the road portion based on at least one feature characterizing the satellites in view.

By taking into account a feature characterizing the satellites in view, it is possible to differentiate between situations (e.g. to assess whether the vehicle is driving under a bridge or on a bottom layer of a multi-road layer) and determine the road portion used by the vehicle.

The method according to the invention is thus easy to implement and does not demand extra cost. In addition, it allows easily determining which road portion is followed by the vehicle in a multi-layer road.

The determination may in practice be performed by comparing the feature just mentioned to corresponding data recorded in a library in association respectively with several road portions, e.g. several road portions associated to a given road position (the location of the vehicle in this road position being determined in a preliminary step, e.g. by conventional means).

The feature mentioned above may be the current number of satellites in view, *i.e.* the number of satellites currently detected by the receiver (for instance the number of satellites which code was extracted from ambient noise by the receiver).

According to an embodiment, in the step of determining, the current number of satellites in view is compared to a recorded number of satellites in view stored in a library.

Preferably, the library is configured to associate road portions to a number of satellites in view in a given road portion, a given road portion of the library being assigned to the road portion in the step of determining when the recorded number of satellites in view associated to the given road portion in the library matches with the current number of satellites in view.

According to an embodiment, the method further comprises, before the step of determining, a step of determining data related to each satellite in view, the determined road portion being further based on the data.

By a non-limitative example, the data determined for each satellite in view comprises at least one of the following information:
- an identifier of the satellite in view;
- an elevation of the satellite in view;
- an information of the longitude of the satellite in view;
- an information of the latitude of the satellite in view.

The determined road portion may further be based on at least one of this information.

According to an embodiment, additional data is further associated with road portions in the library, these additional data comprising at least one of the following parameters:
- a range of elevations of the satellites in view in this recorded road portion;
- a range of longitudes of the satellites in view in this recorded road portion;
- a range of latitudes of the satellites in view in this recorded road portion;
- an angular distribution (for instance with respect to elevation) of satellites in view in this recorded road portion.

The given road portion of the library may further be assigned to the road portion in the step of determining when at least one of the additional data recorded in the library matches with at least one of the information determined for satellites in view.

According to a possible embodiment, when the elevation determined for all satellites currently in view is lower than 60 degrees, the method is configured to assign a road portion pertaining to a lower road of a multi-layer road or a road portion under a bridge.

According to an embodiment, if the current number of satellites in view is nil, the method is configured to assign a portion pertaining to a tunnel or a car park to the road portion.

In other embodiments, the feature mentioned above may be an angular distribution (for instance with respect to elevation) of the respective positions of the satellites in view.

The step of determining the road portion may in this case include comparing this angular distribution to a recorded angular distribution stored in a library, as mentioned above.

In such an embodiment, angular distributions (represented for instance by vectors as further explained below) are stored in the library in association respectively with road portions; the determined road portion (i.e. the road portion assigned by the step of determining the road portion) may then be the road portion associated in the library to the distribution (for instance in practice to the vector) which is the closest to the angular distribution of satellites currently in view (for instance in practice the closest to a vector representing the angular distribution of satellites currently in view).

According to an embodiment, the determined road portion may be shared with a network.

A further object of the invention is to provide a device for detecting a road portion used by a vehicle, said device comprising:
- a receiver configured to detect signals respectively received from satellites in view;
- a controller configured to determine the road portion based on at least one feature characterizing the satellites in view.

According to an embodiment, the receiver is further configured to determine data relating to each satellite in view; the determined road portion may then further be based on the data.

As already noted, the feature mentioned above may be the current number of satellites in view or an angular distribution of the respective positions of the satellites in view, for instance.

The controller may for instance be configured to determine the road portion by comparing said feature to corresponding data recorded in a library in association respectively with road portions.

According to an embodiment, the device further comprises a wireless communication unit configured to emit data to a remote device positioned outside the vehicle.

According to an embodiment, the device comprises a storage means.

### DETAILED DESCRIPTION OF EXAMPLE(S)

The following description with reference to the accompanying drawings will make it clear what the invention consists of and how it can be achieved. The invention is not limited to the embodiment/s illustrated in the drawings. Accordingly, it should be understood that where features mentioned in the claims are followed by reference signs, such signs are included solely for the purpose of enhancing the intelligibility of the claims and are in no way limiting on the scope of the claims.

In the accompanying drawings:
- Figure 1 shows a schematic view of an embodiment of a device according to the present disclosure;
- Figure 2 shows a schematic view of an embodiment of a method according to the present disclosure;
- Figure 3 shows a schematic view of an upper road portion of a multi-layer road;
- Figure 4 shows a schematic view of a bottom road portion of a multi-layer road;
- Figure 5 shows a schematic view of signals received by a device of a vehicle driving on the upper road portion shown on figure 3;
- Figure 6 shows a schematic view of signals received by a device of a vehicle driving on the bottom road portion shown on figure 4; and
- Figure 7 shows a schematic view of a road portion of a tunnel or an underground car park.

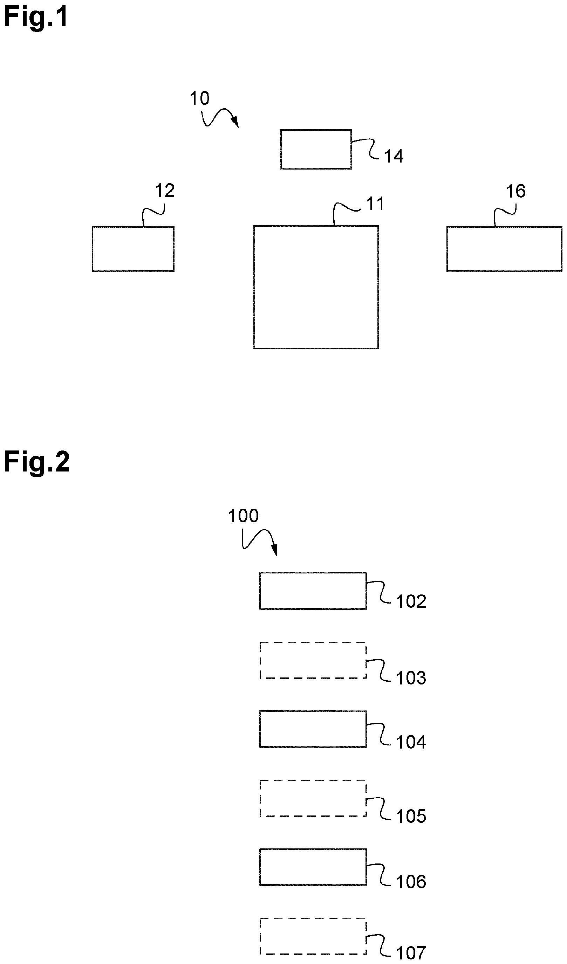

Figure 1 shows an example of a device 10 for detecting a road portion used by a vehicle. As shown in figure 1, the device comprises a controller 11 and a receiver 12. Optionally, the device further comprises a storage means 14 and/or a wireless communication unit 16.

The device 10 illustrated by figure 1 is positioned in a vehicle that uses the road portion.

By road portion, it is meant a real road defined by an altitude and an area. The area is approximately comprised between 10m² and 30m². Typically, the road portion gives an information of a specific layer of a multi-layer road.

By multi-layer road, it is meant a road having different levels referred to as layer of the road. Of course, a multi-layer road can also pertain to a car park split into different levels.

By controller 11, it is meant a computer or a processor or a central processing unit (CPU) or any electronic device allowing to implement a succession of commands and/or calculations. Typically, the controller 11 comprises a processor, a memory and different input and output interfaces. The input and output interfaces may be points of connection allowing the controller 11 to receive data and send commands.

The receiver 12 is configured to receive signals (and thus data, such as ephemeris data) from satellites of a satellite positioning system. In the present disclosure, the satellite positioning system corresponds to a Global Navigation Satellite System (GNSS) or a Global Positioning System (GPS) that refers to a constellation of satellites providing signals from space allowing to transmit positioning and timing signals to the vehicle.

To this end, the receiver 12 is a Global Navigation Satellite System receiver 12. The receiver 12 is configured to receive the signals from the satellite positioning system, specifically from satellites of the satellite positioning system able to communicate with the receiver 12 of the vehicle.

The receiver 12 thus comprises a processor or any electronic device allowing to implement a succession of commands and/or calculations. For instance, the receiver 12 comprises a processor and a memory.

The receiver 12 is coupled to the controller 11. In the present disclosure, the receiver 12 is configured to detect signals emitted by satellites of the satellite positioning system. Each signal is then analyzed by the receiver 12.

The receiver may receive several signals simultaneously.

If the receiver 12 detects a signal received from a particular satellite (*i.e.* for instance extracts the code of the particular satellite from ambient noise), this satellite is considered as a satellite in view by the receiver 12.

Using ephemeris data periodically received from satellites, the receiver 12 is designed to determine the position of each satellite in view.

Then, using the time of receipt of a particular signal from each satellite in view (e.g. the time of receipt of the code of this satellite) for at least 4 satellites in view and the respective positions of these satellites, the receiver 12 is designed to determine the receiver position.

This position is then sent to the controller 11.

The position of the vehicle allows determining an approximative road position followed by the vehicle.

Thus, the receiver 12 is configured to provide a current number of satellites in view and an approximative road position to the controller 11.

In this example, the current number of satellites in view allows determining the layer of a multi-layer road used by the vehicle, as further explained below.

For each satellite in view, the receiver 12 can also determine other information, such as the elevation of the concerned satellite with respect to the location of the receiver 12.

The controller 11 is configured to determine the road portion based on the current number of satellites in view and the approximative road position.

To this end, the controller 11 is configured to compare the current number of satellites in view to a recorded number of satellites in view.

Typically, the recorded number of satellites in view is stored in a library. Here, the library is a data base that can be stored directly in the vehicle via the storage means 14 connected to the controller 11. In a variant, the library is stored in a remote server. In that case, the controller 11 is configured to command the wireless communication unit 16 to connect the controller 11 to the remote server to read the data stored in the library.

In the present disclosure, the library comprises recorded road positions. The library is configured to define for each recorded road position, road portions (layers) associated with this given road position. For instance, if the road position corresponds to a three-layer road, three layers (or road portions) are associated to this three-layer road. In another example, if the recorded road position corresponds to a road portion having only one level (i.e. one layer), only one road portion is associated to this recorded road position.

In addition, in the library, each road portion is associated to a number of satellites in view (liable to be detected) in the given road portion (*i.e.* given layer) of the recorded road position.

Typically, the approximative road position previously determined by the receiver 12 is used by the controller 11 to find the recorded road position. Each recorded road position specifies the road portion (layers) associated to this road position. Then, the controller 11 is configured to compare the current number of satellites in view to the recorded number of satellites in view associated to each road portion of the recorded road position. When the current number of satellites in view matches with a recorded number of satellites in view of one road portion (layer), this recorded road portion is assigned to the road portion by the controller 11.

According to a possible variation, the assigned road portion is the road portion which is associated to the recorded number of satellites in view which is the closest to the current number of satellites in view.

In this way, the real road portion used by the vehicle is determined.

In other embodiments, the determination of the road portion can be performed based on another feature characterizing the satellites in view than the number of satellites in view.

In the library, each road portion of the recorded road position may in this case be associated to additional data characterizing satellites able to communicate in the given layer of this road.

The additional data comprise at least one of the following parameters:
- a range of elevations of the satellites in view associated to this recorded road portion;
- a range of latitudes of the satellites in view associated to this recorded road portion;
- a range of longitudes of the satellites in view associated to this recorded road portion;
- an angular distribution of the satellites in view associated to this recorded road portion.

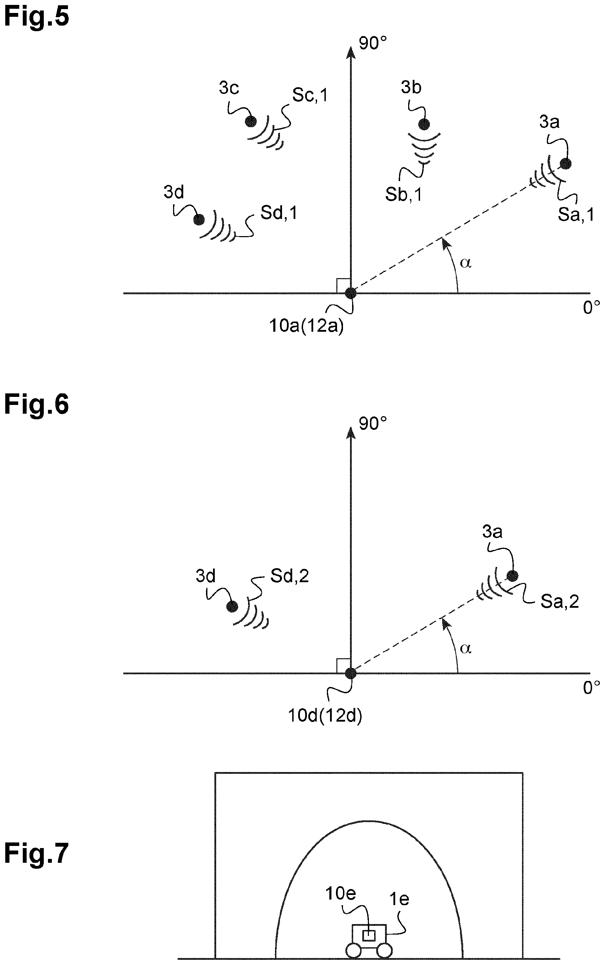

In the present disclosure, elevations above 60 degrees are considered as high elevation. Elevations lower than 60 degrees are considered as low elevation (see figures 5 and 6 described later).

These parameters can also be used to check the road portion determined based on the number of satellites in view.

To this end, in the device 10, for each satellite in view, the controller 11 is then configured to determine information relating to this satellite in view. Here, at least one of the following information is determined for each satellite in view:
- an identifier of the concerned satellite in view;
- an elevation of the concerned satellite in view;
- an information of the longitude of the concerned satellite in view;
- an information of the latitude of the concerned satellite in view.

In some embodiments, some pieces of this information may be used (by comparison to the recorded additional data mentioned above) to determine the road portion where the receiver 12 is located, *i.e.* here the road portion used by the vehicle.

For instance, respective elevations of the satellites in view may be used to determine an angular distribution (here with respect to elevation) of the respective positions of the satellites in view. In a possible embodiment, such an angular distribution of the satellites currently in view may for instance be represented by a 3-element vector which first element is the number of satellite(s) in view having an elevation above 60°, which second element is the number of satellite(s) in view having an elevation between 30° and 60° and which third element is the number of satellite(s) in view having an elevation below 30°.

The determined angular distribution may thus be compared to recorded angular distributions stored in a library in association respectively with road portions associated to the current road position.

The assigned road portion may in this case be the road portion associated with the angular distribution which is the closest to the determined angular distribution. In the example given above where distributions are represented by vectors, the assigned road portion may for instance be the road portion associated with the vector having the smallest Euclidian distance to the vector representing the determined angular distribution.

In other embodiments, some of these pieces of information can be used by the controller 11 to determine the road portion more accurately. To this end, after comparing the current number of satellites in view with the recorded number of satellites in view (first comparison), the controller 11 is then configured to verify whether at least one of the information matches with at least one of the additional data associated to a selected road portion determined in the first comparison.

Typically, the determined elevations of satellites in view can be used. For each satellite in view, if the determined elevation is comprised in the range of elevations of the satellites associated to the recorded road position, the controller 11 is configured to validate the road portion determined in the first comparison.

In a variant, at least one of the parameters explained above can be used to determine the road portion used by the vehicle.

Typically, at least one of these parameters is used if several recorded number of satellites in view of the library match with the current number of satellites in view. Thus, this comparison can also be used to select one road portion when several road portions are determined in the first comparison. To this end, for a given stored road portion, when the recorded number of satellites in view matches with the current number of satellites in view and when each determined elevation is comprised in the recorded range of elevations, this recorded road portion is assigned as the current road portion.

All the information determined by the receiver 12 may in some embodiments be compared with the additional data stored in the library. With such features, the selection of the layer of the road portion is more accurate.

It will be disclosed with figure 2 a first embodiment of a method 100 for detecting a road portion used by a vehicle.

The method 100 shown on figure 2 is typically implemented by the device 10 illustrated by figure 1.

The method 100 comprises a step of detecting 102 signals emitted by various satellites of the satellite positioning system. Typically, the receiver 12 detects a signal from a given satellite by extracting a code corresponding to this given satellite from ambient noise.

The method 100 comprises a step of counting 104 a current number of satellites in view, *i.e.* a number of satellites from which a signal was detected by the receiver 12 in step 102. This step allows checking if the detected signals can be used in a future step of the method 100, for instance if the detected signal can be used to determine the road portion.

The method 100 further comprises a step of determining 105 data respectively related to each satellite in view. The step of determining 105 is carried out by the receiver 12. Typically, the step of determining 105 is performed before the step of determining 106 described below, but may be performed after or before the step of counting 104.

As explained above, the receiver 12 is adapted to determine for each satellite in view:
- an identifier of the given satellite;
- an elevation of the given satellite;
- an information of the longitude of the given satellite;
- an information of the latitude of the given satellite.
The information is recorded in the memory of the receiver 12 or if the device comprises a storage means 14, in the storage means 14. This information is also provided to the controller 11.

As explained above, the information described above is used by the receiver 12 for determining the position of the vehicle using a process known to the skilled person. The position of the vehicle gives an approximate information on the road position used by the vehicle. This approximate road position is also provided to the controller 11.

After determining the above information, the method 100 further comprises a step of determining 106 by the controller 11 the road portion based on a feature characterizing the satellites in view, such as the current number of satellites in view. Typically, in the step of determining 106, the controller 11 compares the current number of satellites in view with the recorded number of satellites in view stored in the library as disclosed above.

This comparison allows determining the road portion used by the vehicle, for example a specific layer of a multi-layer road. Thus, the method 100 allows determining accurately the road portion on which the vehicle is driving using a criterion pertaining to a characteristic of satellites in view, here the number of satellites in view, *i.e.* the number of satellites from which a signal was detected by the device 10 in step 102. The method 100 is thus more accurate, easy to implement and does not demand extra cost.

According to a possible variation, the step of determining 106 the road portion can be performed by a remote server. In this case, the feature characterizing satellites in view (*i.e.* here the number of satellites in view) and possibly the position of the vehicle are sent (upon instruction of the controller 11 and/or possibly using communication unit 16) to a remote server and the step of determining 106 the road portion based on said feature (here the number of satellites in view) and on the position of the vehicle may thus be performed by the remote server. The remote server can then send the determined road portion to the controller 11 (e.g. using communication unit 16).

In case of several recorded road portions being assigned to the road portion during the step of determining 106, the method is configured to use other criteria to determine the actual road portion. In alternative embodiments, one of these other criteria can be used per se to determine the road portion (this other criterion thus replacing the number of satellites in view).

Typically, the method 100 is configured to use the information retrieved in the step of determining 105. Here, in the method 100, at least one of the information stored in the device 10 is used in the step of determining 106 to determine the real road portion used by the vehicle.

To this end, the controller 11 uses the additional data stored in the library. Indeed, in the library, each recorded road portion is associated to additional data pertaining to satellites in view in this given road portion. In the present disclosure, the additional data comprise at least one of the following parameters:
- a range of elevations of the satellites in view;
- a range of longitudes of the satellites in view;
- a range of latitudes of the satellites in view;
- an angular distribution of the satellites in view (for instance a distribution of elevations of the satellites in view).

Thus, in the step of determining 106, if several recorded road portions can be selected as the determined road portion, the controller 11 compares at least one of the data determined in step 105 to a corresponding one of the additional data.

Typically, the controller 11 compares the respective elevations of satellites in view to the range of elevations of the satellites associated to the recorded road portion, or to the recorded distribution of elevations of the satellites in view associated to the recorded road portion.

In other words, it means that in the method 100, the step of determining 106 may be first configured to compare the current number of satellites in view with the recorded number of satellites in view (first comparison) and then to compare the respective elevations of the satellites in view to a recorded range of elevations or to a recorded distribution of elevations (second comparison).

As already indicated, in some embodiments, only one of these comparisons (i.e. either the first comparison or the second comparison) can be used.

If several recorded road portions can be assigned to the road portion, other criteria can be used, for example, the longitude to only select one road portion at the end of the step of determining 106.

Of course, as explained above, even if only one road portion is determined after the first comparison, the step of determining 106 can comprise a step of checking the determined road portion based on the additional information determined for each satellite in view. As explained above, the data pertaining to the elevation is preferably used in a first place after (or in replacement of) the first comparison (comparison of the current number of satellites in view with the recorded number of satellites in view) but other criteria can be used as explained above.

Optionally, the method 100 further comprises a step of sharing 107 information with a network.

Typically, the network can be any element than can be connected to the vehicle via the wireless communication unit 16 of the device 10. For example, the network can comprise infrastructures or vehicles close to the vehicle and able to communicate with the vehicle via the V2X technology, or it can be a remote server, or pedestrians having smart device.

The step of sharing 107 is configured to exchange information, for example the road portion determined in the step of determining 106. The road portion provided at the end of the step of determining 106 can be shared with adjacent vehicles, for example vehicles driving in the same road portion used by the vehicle comprising the device 10 or vehicle spaced by less than 20 meters from the vehicle comprising the device 10. In a variant, the determined position can be shared with a remote server or smart device of pedestrians closed to the vehicle.

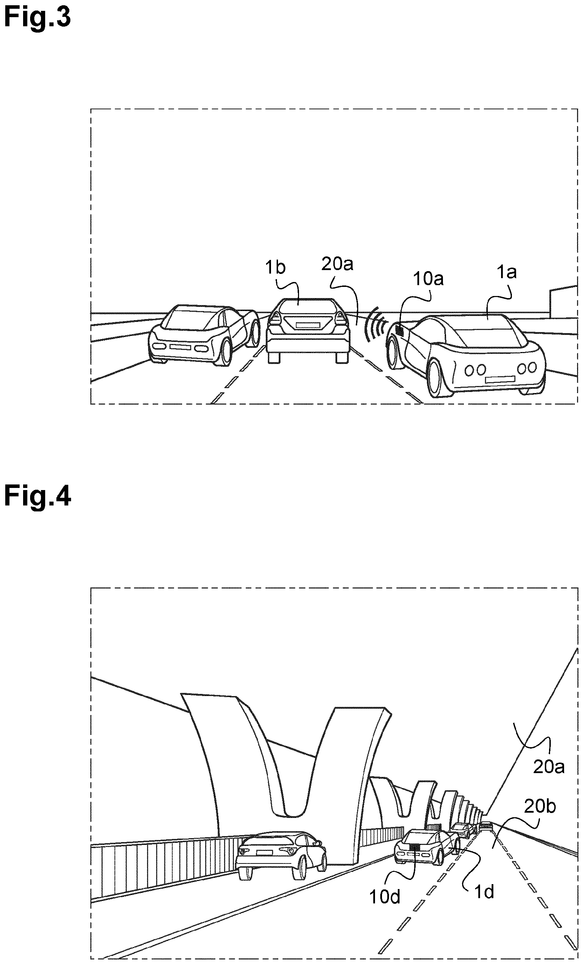

It will be disclosed with reference to figures 3 to 6 a first implementation example of the method 100.

Figure 3 and figure 4 show a multi-layer road comprising a bottom road portion 20b and an upper road portion 20a. In figure 3, a vehicle 1a is driving on the upper road portion 20a. The upper road portion 20a used by the vehicle 1a comprises three traffic lanes and the upper road portion 20a is not covered by any element. In figure 4, a vehicle 1d is driving on the bottom road portion 20b, which is covered by the upper road portion 20a. The vehicle 1a and the vehicle 1d comprise each a device 10a, 10d as disclosed above.

Figure 5 shows a schematic view of signals received by the receiver 12a of the device 10a of the vehicle 1a driving on the upper road portion 20a and figure 6 shows a schematic view of signals received by the receiver 12d of the device 10d of the vehicle 1d driving on the bottom road portion 20b.

In the present disclosure, the elevation of a satellite α (in degrees: °) is defined as the angle formed between the horizontal plane and a line connecting the device 10 (precisely the receiver 12) and the concerned satellite.

As shown in figure 4, the receiver 12a of the device 10a receives four distinctive signals numbered respectively S_{a,1}, S_{b,1}, S_{c,1}, S_{d,1}, the signal S_{a,1} being emitted by the satellite 3a, the signal S_{b,1} being emitted by the satellite 3b, the signal S_{c,1} being emitted by the satellite 3c and the signal S_{d,1} being emitted by the satellite 3d.

In this example, the satellites 3b and 3c present each an elevation comprised between 60 degrees and 90 degrees (See figures 5 and 6). Thus, these two satellites are considered as having high elevation. The satellites 3a and 3d present each an elevation lower than 60 degrees. Thus, these two satellites are considered as having low elevation.

In this example, all the signals S_{a,1}, S_{b,1}, S_{c,1}, S_{d,1} are detected by the device 10a such that the satellites 3a, 3b, 3c, 3d are considered in view by receiver 12a. Thus, these four satellites 3a, 3b, 3c, 3d are counted in the step of counting 104 by the receiver 12a of the device 10a of the vehicle 1a. The road portion (here the upper road portion 20a) is thus determined based on this number (four) of satellites currently in view as explained above in the method 100.

As shown in figure 6, the receiver 12d of the device 10d detects only two distinctive signals numbered respectively S_{a,2}, S_{d,2}, the signal S_{a,2} being emitted by the satellite 3a, and the signal S_{b,2} being emitted by the satellite 3d. Thus, only satellites 3a and 3d are considered as in view by receiver 12d and are counted in the step of counting 104 by the receiver 12d of the device 10d of the vehicle 1d. It also means that the signals emitted by the satellites 3b, 3c are not received by the receiver of the device 10d of the vehicle 10d positioned on the bottom road portion 20a.

Thus, the counted number of satellites in view determined by the device 10a differs from the counted number of satellites in view determined by the device 10d.

This is due to the fact that the signals emitted by the satellites 3b and 3c have each an elevation higher than 60 degrees and comprised in the range of 60-90 degrees and/or because the signals emitted by the satellites 3b, 3c are too low to be detected by the device 10d. Indeed, the power strength of the signals S_{a,2}, S_{d,2}, is lower than the power strength of the signals S_{a,1}, S_{d1}, due to the position of the bottom road portion 20b. The road portion (here the bottom road portion 20b) is thus determined based on these two counted numbers as explained above in the method 100.

Consequently, in this example, the receivers of the vehicles 10a, 10d will estimate a same road position with the conventional method. However, as the counted number of satellites in view counted by the receiver 12a and the counted number of satellites in view counted by the receiver 12d are different, it is possible to distinguish the road portion used by the vehicle 10a from the road portion used by the vehicle 10d as disclosed above.

Consequently, thanks to the method 100, the counted number of satellites in view allows differentiate the road portion followed by the vehicle 10a and the road portion followed by the vehicle 10d. The determination of the road portion is thus more accurate.

In addition, the information pertaining to the elevation of the satellite emitting each signal can be used by the receivers of each device 10a, 10b.

Indeed, the device 10d only receives signals of satellites having a low elevation, here an elevation lower than 60 degrees, whereas the device 10a receives signals of satellites having low and high elevations because no element (i.e. obstacle) mitigates the signals emitted by the satellites 3a, 3b, 3c, 3d. Thus, the controller of the device 10d can determine or confirm the road position used by the vehicle 1d based on the elevation of the satellite emitting the signal S_{a,2}, S_{d,2}. Similarly, the controller of the device 10a can also verify the road portion assigned at the end of the first comparison by using the value of the elevation of the satellites in view.

In addition, as can be seen in figure 3, another vehicle 1b is positioned close to the vehicle 1a. The device 10a can thus exchange data with the vehicle 1b, for example the determined road portion provided by the controller of the device 10a at the end of the step of determining 106. Of course, other data can be shared with the vehicle 1a. For example, the wireless commination unit of the device 10a can be also configured to received data from the adjacent vehicle 1b, these data can be used in the step of determining 106 to determine the road portion.

Figure 7 shows another implementation of the method 100.

On figure 7, a vehicle 1e is driving on a road portion positioned in a tunnel or in an underground car park. The vehicle 1e comprises a device 10e as disclosed above.

In this situation, the receiver of the vehicle 10e does not receive any signal. Consequently, in that case, the device 10e counts zero satellite in view in the step of counting 104. To this end, the value nil is assigned to the counted number of satellites in view. As the value nil is provided at the end of the step of counting 104, in the step of determining 106, a position pertaining to a tunnel or a car park is assigned as the road portion. The specific road portion used by the vehicle is determined accurately by using other data. The controller of the device 10e use recorded data stored in the controller or in the storage means of the device 10e. Typically, the navigation data (for example the road position) previously stored can be used to determine the road portion belonging to the tunnel or the car park used by the vehicle 10e. This improves the accuracy of the step of determining 106.

In addition, to determine the road portion more accurately, the method 100 can use data provided by the step of sharing 107 information with a network, typically information coming from adjacent vehicle, or infrastructures or pedestrians (for example in the case of a car park).

## Claims

1. Method (100) for detecting a road portion used by a vehicle (10a, 10d, 10e), the method (100) comprising the following steps:
- a receiver (12) detecting (102) signals respectively received by satellites in view;
- determining (106) the road portion based on at least one feature characterizing the satellites in view.

2. Method (100) according to claim 1, wherein said feature is the current number of satellites in view.

3. Method (100) according to claim 2, wherein in the step of determining (106), the current number of satellites in view is compared to a recorded number of satellites in view stored in a library.

4. Method (100) according to claim 3, wherein the library is configured to associate road portions to a number of satellites in view in a given road portion, a given road portion of the library being assigned to the road portion in the step of determining when the recorded number of satellites in view associated to the given road portion in the library matches with the current number of satellites in view.

5. Method (100) according to any one of claims 1 to 4, wherein the method (100) further comprises, before the step of determining (106), a step of determining (105) data relating to each satellite in view, the determined road portion being further based on the data.

6. Method (100) according to claim 5, wherein the data determined for each satellite in view comprises at least one of the following information:
- an identifier of the satellite in view;
- an elevation of the satellite in view;
- an information of the longitude of the satellite in view;
- an information of the latitude of the satellite in view;
the determined road portion being further based on at least one of this information.

7. Method (100) according to any one of claims 2 to 6, wherein if the current number of satellites in view is nil, the method (100) is configured to assign a portion pertaining to a tunnel or a car park to the road portion.

8. Method (100) according to claim 1, wherein said feature is an angular distribution of the respective positions of the satellites in view.

9. Method (100) according to claim 8, wherein the step of determining the road portion includes comparing said angular distribution to a recorded angular distribution stored in a library.

10. Device (10) for detecting a road portion used by a vehicle (10a, 10d, 10e), said device (10) comprising:
- a receiver (12) configured to detect signals respectively received from satellites in view;
- a controller (11) configured to determine the road portion based on at least one feature characterizing the satellites in view.

11. Device (10) according to claim 10, wherein the receiver (12) is further configured to determine data relating to each satellite in view, the determined road portion being further based on the data.

12. Device (10) according to claim 10 or 11, wherein said feature is the current number of satellites in view.

13. Device (10) according to claim 10 or 11, wherein said feature is an angular distribution of the respective positions of the satellites in view.

14. Device (10) according to any of claims 10 to 13, wherein the controller (11) is configured to determine the road portion by comparing said feature to corresponding data recorded in a library in association respectively with road portions.

15. Device (10) according to anyone of claims 10 to 14, wherein the device (10) further comprises a wireless communication unit (16) configured to emit data to a remote device positioned outside the vehicle.
